# FASCICULE DE BREVET EUROPEEN

(11) **EP 3 810 461 B1**
(45) Date de publication et mention de la délivrance du brevet: **16.03.2022**
(21) Numéro de dépôt: 19734850.1
(22) Date de dépôt: 21.05.2019
(51) Int. Cl.: B60R 21/06, B60R 21/13, B60R 21/232

(54) **DISPOSITIF DE PROTECTION D'UN COUSSIN GONFLABLE DE SECURISATION LATERALE DES PASSAGERS D'UN VEHICULE AUTOMOBILE**
VORRICHTUNG ZUM SCHUTZ EINES BEIFAHRERAIRBAGS FÜR EIN KRAFTFAHRZEUG
DEVICE FOR PROTECTING A PASSENGER SIDE SAFETY AIRBAG FOR A MOTOR VEHICLE

(30) Priorité: 19.06.2018 FR 1855379
(43) Date de publication de la demande: 28.04.2021
(73) Titulaire: PSA Automobiles SA, 78300 Poissy (FR)
(72) Inventeur: NOIZET, Jessica, 78960 VOISINS LE BRETONNEUX (FR); LORETTE, Frederic, 78960 VOISINS LE BRETONNEUX (FR); PATRON, Cyril, 91650 BREUX JOUY (FR)
(86) Numéro de dépôt international: PCT/FR2019/051145
(87) Numéro de publication internationale: WO 2019/243679

(56) Documents cités:
- EP-A1- 2 682 307

## Description

La présente invention relève du domaine des véhicules automobiles et plus particulièrement des modalités de protection des passagers pour leur éviter des blessures en cas d'accidents du véhicule. L'invention relève plus particulièrement des modalités d'installation sur une caisse de véhicule automobile, d'un dispositif à filet de charge arrière et d'un dispositif à rideau gonflable procurant en position active une protection latérale des passagers.

Les véhicules automobiles sont pourvus de divers équipements de protection des passagers pour leur éviter des blessures en cas d'accident. Dans le cadre de la présente invention, on relèvera parmi de tels équipements des dispositifs à rideau gonflable de protection latérale des passagers qui sont installés respectivement aux côtés droit et gauche de la caisse, ainsi qu'un dispositif à filet de charge ménageant un obstacle de protection des passagers vis-à-vis d'une charge transportée dans un compartiment arrière du véhicule.

Un dispositif à rideau gonflable comprend typiquement un coussin gonflable rangé en position inopérante dans un boîtier et équipé d'une réserve de gaz. En cas de chocs subis par le véhicule, le coussin gonflable est automatiquement placé en position active en étant alimenté en gaz depuis la réserve pour former un rideau de protection latérale des passagers.

Le dispositif à rideau gonflable est classiquement installé en contrebas d'un pavillon du véhicule, en étant monté longitudinalement sur la caisse du véhicule via au moins un organe d'ancrage par exemple fixé sur une doublure de custode et/ou sur un élément d'armature de la caisse tel qu'un longeron latéral supérieur et/ou un montant. La réserve de gaz est par exemple montée sur la caisse au dessus et le long du boîtier, la réserve de gaz et le boîtier étant potentiellement fixés l'un à l'autre, via des colliers par exemple.

Le dispositif à filet de charge est monté sur la caisse en s'étendant transversalement à l'arrière de sièges destinés aux passagers. Un dispositif à filet de charge comprend un filet de charge qui est porté à son sommet par une barre transversale ancrée à ses extrémités droite et gauche sur la caisse. Les extrémités de la barre sont chacune ancrées sur la caisse via un organe d'ancrage fixé sur la caisse via une doublure de custode et/ou sur des éléments d'armature de la caisse tel qu'un longeron latéral supérieur et/ou un montant par exemple.

Dans ce contexte les dispositifs à rideau gonflable, qui sont montés l'un au côté latéral droit et l'autre au côté latéral gauche de la caisse, sont susceptibles d'être placés à proximité des extrémités respectives de la barre porteuse du filet de charge. Une telle proximité rend délicate l'ancrage sur la caisse, dans de mêmes espaces restreints respectivement droit et gauche, à la fois d'une extrémité de la barre et de l'un des dispositifs à rideau gonflable.

Une telle difficulté d'ancrage à proximité l'un de l'autre d'une extrémité de la barre d'un dispositif à filet de charge et d'un dispositif à rideau gonflable, ressort par exemple du document EP2682307 (TOYOTA MOTOR CO Ltd). Selon ce document, il est proposé de surmonter une telle difficulté en exploitant un même support pour le montage conjoint sur la caisse d'une extrémité de la barre du dispositif à filet de charge et d'un dispositif à rideau gonflable.

Dans ce contexte, la présente invention a pour objet une caisse de véhicule automobile équipée d'une part à chacun de ses côtés latéraux droit et gauche d'un dit dispositif à rideau gonflable et d'autre part d'un dit dispositif à filet de charge, dont les extrémités respectives d'une dite barre qu'il comprend sont chacune fixées sur la caisse à proximité d'un dispositif à rideau gonflable.

Un but de l'invention est de surmonter la difficulté susvisée liée au montage d'un dit dispositif à rideau gonflable à proximité d'une extrémité de la barre que comprend un dit dispositif à filet de charge.

Sous contrainte d'une telle difficulté et selon un choix relevant de l'invention, un autre but de l'invention est de privilégier des ancrages individuels sur la caisse d'une part des dispositifs à rideau gonflable et d'autre part de chacune des extrémités de la barre du dispositif à filet de charge.

Il est notamment privilégié de procurer des ancrages respectifs efficaces sur la caisse des dispositifs à rideau gonflable et du dispositif à filet de charge, qui sont adaptés à leurs fonctions spécifiques. Autrement dit, il est privilégié d'organiser les ancrages respectifs sur la caisse des dispositifs à rideau gonflable et du dispositif à filet de charge au regard des efforts spécifiques qu'ils sont prévus de supporter en cas de chocs subis par le véhicule.

Un autre but de l'invention est d'éviter un risque de perturbation du fonctionnement des dispositifs à rideau gonflable en raison de la présence proche des extrémités respectives de la barre du dispositif à filet de charge.

Un autre but de l'invention est de proposer des modalités d'ancrage des dispositifs à rideau gonflable et du dispositif à filet de charge dont les coûts de mises en œuvre sont au mieux réduits dans le contexte d'une concurrence économique notoirement sévère dans le domaine automobile.

Sous contrainte une telle recherche de réduction de coûts, il est notamment visé de telles modalités d'ancrage via des organes d'ancrage respectivement affectés aux dispositifs à rideau gonflable et aux extrémités de la barre du dispositif à filet de charge, qui soient de structure simple et dont le montage sur la caisse est aisé à réaliser. Il est plus particulièrement visé d'éviter des interférences structurelles entre les dits organes d'ancrage respectivement affectés à la barre du dispositif à filet de charge et à chacun des dispositifs à rideau gonflable, qui porteraient atteinte au fonctionnement des dispositifs à rideau gonflable et/ou au fonctionnement du dispositif à filet de charge, et/ou qui seraient susceptibles de complexifier leurs montages individuels sur la caisse.

Les buts visés par la présente invention sont atteints isolément ou en combinaison par application des dispositions qui suivent.

Il est dès à présent précisé certaines notions relatives et des termes qui sont communément admis, compris et utilisés dans le domaine automobile pour décrire un véhicule automobile et/ou ses composants. De tels notions relatives et/ou termes seront dès lors utilisés pour définir l'invention, notamment pour rendre concises les revendications, en étant d'évidence compris en tant que tels par l'homme du métier sans avoir nécessairement à les préciser à nouveau par la suite.

Les directions d'extension d'un véhicule, et donc de la caisse qu'il comprend, sont communément définies dans un repère orthonormé identifié suivant une direction longitudinale, une direction transversale et une direction verticale. Dans le cadre de l'invention, de telles directions et les notions relatives afférentes sont appliquées à la caisse et/ou à ses composants et/ou à ses équipements.

La notion longitudinal est typiquement considérée entre l'avant et l'arrière du véhicule, par rapport à la station du conducteur qui fait face à la direction d'avancement vers l'avant du véhicule. Le véhicule s'étend verticalement, ou autrement dit en élévation, perpendiculairement à son plan de roulage au sol. Le véhicule s'étend transversalement entre ses côtés latéraux droit et gauche, considérés par rapport au conducteur en station de conduite du véhicule.

Par suite, les notions avant et arrière sont des notions relatives considérées suivant l'extension longitudinale du véhicule par rapport à la station de conduite du conducteur. Les notions inférieur et supérieur ou autres notions apparentées comme par exemple base et sommet, et/ou sous, dessous et dessus, et/ou surplomb et contrebas par exemple, sont des notions relatives considérées verticalement par rapport au plan de roulage du véhicule.

Par ailleurs, la caisse est classiquement équipée d'un pavillon qui ménage une toiture du véhicule en étant fixé à une armature de toit que comprend la caisse. Le pavillon est installé au sommet de la caisse en étant formé d'au moins un panneau. Les côtés latéraux de la caisse sont habillés de custodes formées de panneaux latéraux qui sont potentiellement équipées de doublures disposées et s'étendant plus ou moins vers l'intérieur de la caisse.

Un dispositif à rideau gonflable latéral est typiquement installé à un côté latéral droit ou gauche de la caisse, notamment en contrebas du pavillon. Classiquement un dispositif à rideau gonflable comprend un coussin plié en station inopérante à l'intérieur d'un boîtier, et une réserve de gaz à partir de laquelle le coussin peut être gonflé en station active, notamment en cas de chocs subis par le véhicule à un seuil d'impact prédéfini.

Dans le cadre de l'invention, la réserve de gaz est de préférence installée en contrebas du pavillon et en surplomb du boîtier. La réserve de gaz et le boîtier installés sur la caisse présentent notamment une extension principalement longitudinale. Lorsque le coussin est placé en station active par suite de son gonflage, le boîtier est classiquement manœuvré à l'ouverture pour libérer le coussin qui forme alors un rideau de protection latérale des passagers installés sur des sièges équipant le véhicule.

Un dispositif à filet de charge arrière est typiquement installé à l'arrière de sièges du véhicule pour protéger les passagers vis-à-vis d'une charge embarquée dans un compartiment arrière ménagé par la caisse. Le dispositif à filet de charge comprend un filet de charge, ou autre écran souple analogue, couramment porté à son sommet par une barre qui est installée en contrebas du pavillon et dont les extrémités sont montées sur la caisse respectivement à ses côtés latéraux droit et gauche. Le filet de charge forme un écran souple ménageant un obstacle à l'encontre d'un débordement de la charge hors du compartiment arrière vers l'avant, notamment en cas de décélération du véhicule.

La notion de barre est typiquement comprise comme étant une pièce mécanique principalement allongée entre ses extrémités. La barre installée sur la caisse s'étendant transversalement entre les côtés latéraux de la caisse.

Compte tenu de ce qui précède, la présente invention a pour objet une caisse de véhicule automobile équipée de dispositifs à rideau gonflable et d'un dispositif à filet de charge.

Les dispositifs à rideau gonflable sont disposés à des côtés latéraux respectivement droit et gauche de la caisse considérés suivant une direction transversale d'extension de la caisse. Chacun des dispositifs à rideau gonflable comprend un coussin gonflable plié à l'intérieur d'un boîtier surplombé par une réserve de gaz suivant une direction verticale d'extension de la caisse. Le boîtier et la réserve de gaz s'étendent longitudinalement suivant une direction longitudinale d'extension de la caisse entre l'avant et l'arrière de la caisse, en étant ancrés sur la caisse via au moins un premier organe d'ancrage.

Le dispositif à filet de charge s'étend transversalement à l'arrière d'un emplacement de la caisse réservé à la réception d'au moins un siège. Ledit au moins un siège est par exemple une banquette arrière ou au moins un siège avant du véhicule. Le dispositif à filet de charge comprend un filet de charge, à mailles plus ou moins serrées, qui est porté à son sommet par une barre transversale dont les extrémités sont chacune ancrées sur la caisse à ses côtés latéraux respectivement droit et gauche, via au moins un deuxième organe d'ancrage.

Dans ce contexte et tenant compte d'une proximité longitudinale entre l'une quelconque des extrémités de la barre et un dispositif à rideau gonflable, l'invention est reconnaissable en ce qu'un déflecteur est longitudinalement interposé entre l'un quelconque des dispositifs à rideau gonflable et l'extrémité de la barre longitudinalement proche de l'extrémité arrière dudit quelconque dispositif à rideau gonflable.

Le déflecteur forme un écran de protection du coussin gonflable que comprend le dispositif à rideau gonflable, en phase de gonflage du coussin depuis sa station inopérante vers sa station active et/ou en station active. Le déflecteur permet d'éviter une blessure pouvant être infligée au coussin par le dispositif à filet de charge, notamment via une extrémité de la barre qu'il comprend et qui est longitudinalement proche du dispositif à rideau gonflable. Ainsi, un risque d'altération du fonctionnement du dispositif à rideau gonflable est évité malgré une position du coussin longitudinalement proche de l'extrémité de la barre.

Plus particulièrement, le déflecteur est formé d'au moins une paroi ancrée sur la caisse. Ladite au moins une paroi s'étend suivant un plan transversal/vertical en interposition longitudinale entre le dispositif à rideau gonflable et l'extrémité de la barre.

L'extrémité de la barre est de préférence munie d'un organe de butée de positionnement transversal du filet de charge. Un tel organe de butée est par exemple formé d'un flasque périphérique dont est munie la barre à son extrémité et qui est placé à l'arrière du déflecteur pour éviter un risque de blessure pouvant être infligé par le flasque au coussin en phase de gonflage et/ou en station active.

Selon une forme de réalisation, le déflecteur est au moins en partie solidaire de l'un quelconque au moins d'un dit premier organe d'ancrage et/ou d'un dit deuxième organe d'ancrage.

L'un au moins du premier organe d'ancrage et/ou du deuxième organe d'ancrage est avantageusement mis à profit pour ménager le déflecteur. Le déflecteur peut être aisément intégré à l'une au moins de ferrures formant respectivement le premier organe d'ancrage et/ou le deuxième organe d'ancrage, notamment par pliage des ferrures. De telles ferrures peuvent être par exemple chacune agencées en une platine intégrant une dite paroi constitutive du déflecteur et alors formée par pliage de la ferrure en prolongement de la platine.

Ainsi selon une forme de réalisation, le déflecteur est issu de la matière constitutive de l'un quelconque au moins d'un dit premier organe d'ancrage et/ou d'un dit deuxième organe d'ancrage auquel le déflecteur est intégré.

Plus particulièrement selon une forme de réalisation, le déflecteur est au moins en partie intégré à l'extrémité arrière d'une première platine constitutive d'un dit premier organe d'ancrage.

Selon une forme spécifique de réalisation, l'un quelconque au moins de la réserve de gaz et/ou du boîtier sont ancrés sur la caisse via la première platine. La première platine comporte à son extrémité arrière un premier retour concourant au plan de la première platine en étant orienté vers l'intérieur de la caisse. Le premier retour ménage alors une première paroi au moins en partie constitutive du déflecteur.

De préférence, le premier organe d'ancrage est formé de la première platine qui s'étend le long d'une doublure de custode que comprend la caisse et à laquelle la première platine est fixée, par vissage ou par boulonnage par exemple. La première platine s'étend contre la doublure de custode, de préférence à sa face orientée vers l'extérieur de la caisse.

De préférence encore, la première platine est aussi fixée au dispositif à rideau gonflable via la réserve de gaz qui est elle-même attachée au boîtier, par exemple via des colliers. Subsidiairement, le boîtier est en outre de préférence maintenu par crochetage sur la doublure de custode, via au moins un crochet équipant le boîtier.

Plus particulièrement encore selon une forme de réalisation, le déflecteur est au moins en partie intégré à l'extrémité avant d'une deuxième platine constitutive d'un dit deuxième organe d'ancrage.

De préférence, le deuxième organe d'ancrage est formé de la deuxième platine qui s'étend le long de ladite doublure de custode à laquelle la deuxième platine est fixée, par vissage ou par boulonnage par exemple. La deuxième platine s'étend contre la doublure de custode, de préférence à sa face orientée vers l'extérieur de la caisse, en prolongement longitudinal de la première platine.

Dans ce contexte préférentiel et non exclusif, le déflecteur est de préférence composé d'une première paroi intégrée à la première platine et d'une deuxième paroi intégrée à la deuxième platine. La première paroi et la deuxième paroi sont accolées l'une contre l'autre suivant le plan global d'extension du déflecteur.

Il est ainsi compris que le déflecteur est de préférence au moins en partie ménagé par au moins une paroi indifféremment intégrée au premier organe d'ancrage et/ou au deuxième organe d'ancrage. Ainsi selon diverses variantes de réalisation, le déflecteur est formé :
- ) soit d'une dite première paroi intégrée au premier organe d'ancrage,
- ) soit d'une dite deuxième paroi intégrée au deuxième organe d'ancrage,
- ) soit et de préférence conjointement par une dite première paroi et une dite deuxième paroi apposées l'une contre l'autre, en étant potentiellement fixées entre elles, par soudage et/ou via au moins un organe d'attache par exemple, ou encore en étant potentiellement exemptes de fixation l'une à l'autre.

Pour éviter qu'un bord du déflecteur ne blesse le coussin en phase de gonflage et/ou en station active, l'un au moins des bords du déflecteur ménage une rampe contre laquelle le coussin est apte à glisser en phase de gonflage et/ou en station active. Une telle rampe est configurée en organe de guidage du coussin en phase de gonflage et/ou en station active, pour éviter son contact avec un bord vif du déflecteur. De préférence, la rampe est orientée vers l'arrière du déflecteur en direction du deuxième organe d'ancrage.

Ainsi selon une forme de réalisation, au moins une aile de déflection orientée vers l'extrémité de la barre est ménagée le long de l'un au moins des bords périphériques du déflecteur.

Plus particulièrement, l'un au moins des bords de l'une quelconque au moins de ladite première paroi et de ladite deuxième paroi est pourvu d'une dite aile de déflection. Ainsi, en phase de gonflage et/ou en station active du coussin, le coussin est protégé d'une part par le déflecteur vis-à-vis d'une blessure pouvant être infligée au coussin par l'extrémité de la barre et d'autre part par ladite au moins une aile de déflection d'une blessure pouvant être infligée au coussin par l'un au moins des bords du déflecteur.

Selon une forme de réalisation, Il est notamment tenu compte du cas où l'espace d'installation sur la caisse du premier organe d'ancrage et/ou du deuxième organe d'ancrage est restreint et/ou encombré. La première paroi équipant le premier organe d'ancrage est alors susceptible d'être d'une extension insuffisante pour ménager seule le déflecteur en certifiant un guidage du coussin satisfaisant en phase de gonflage et/ou son positionnement correct en station active.

Dans ce cas, la deuxième paroi est mise à profit pour participer à la formation du déflecteur, isolément ou préférentiellement en combinaison avec la première paroi. En cas de formation du déflecteur conjointement par la première paroi et la deuxième paroi, la deuxième paroi peut être mise à profit pour déborder en périphérie de la première paroi en ménageant ladite au moins une rampe.

Ainsi selon une forme de réalisation, la deuxième paroi déborde de la périphérie de la première paroi et comporte au moins une dite aile de déflection qui est ménagée le long de l'un au moins des bords de la deuxième paroi en étant orientée et infléchie vers l'extrémité de la barre du dispositif à filet de charge.

De préférence, le premier organe d'ancrage et le deuxième organe d'ancrage sont fixés sur une dite doublure de custode équipant la caisse, en s'étendant en partie contre la doublure de custode à sa face orientée vers l'extérieur de la caisse. Ceci permet notamment de protéger le coussin en phase de gonflage et/ou en station active vis-à-vis de blessures pouvant être infligées au coussin par le premier organe d'ancrage et/ou par le deuxième organe d'ancrage. Dans ce cas, une fenêtre est ménagée à travers la doublure de custode pour autoriser l'émergence, à travers la doublure de custode, du déflecteur vers l'intérieur de la caisse depuis sa face orientée vers l'extérieur de la caisse.

Ainsi selon une forme de réalisation, le déflecteur émerge hors d'une fenêtre ménagée à travers une doublure de custode que comprend la caisse et sur laquelle sont ancrés le dispositif à rideau gonflable via ledit au moins un premier organe d'ancrage et l'extrémité de la barre du dispositif à filet de charge via ledit au moins un deuxième organe d'ancrage.

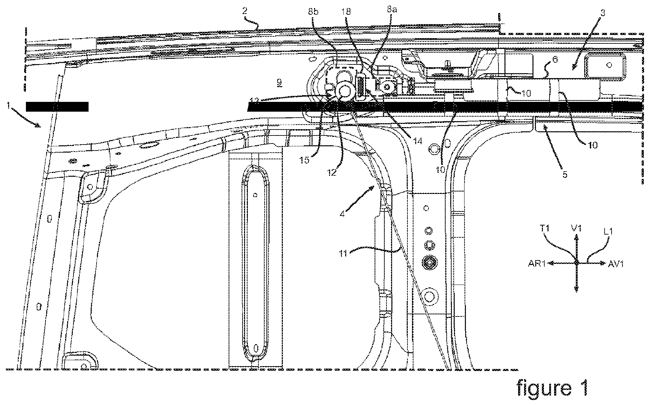

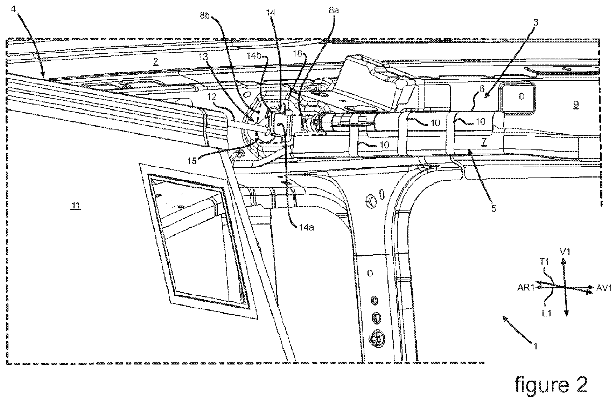

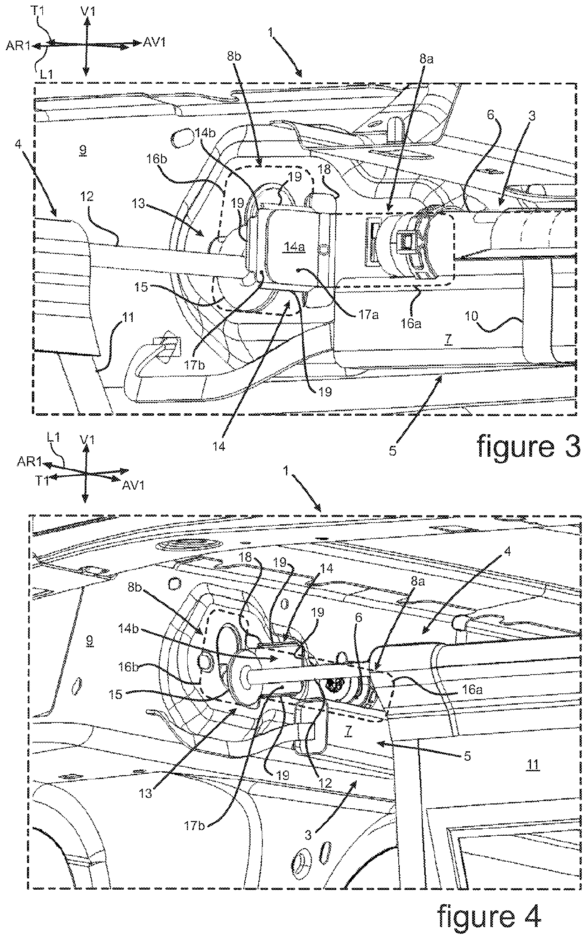

Un exemple de réalisation de la présente invention va être décrit en relation avec les figures des planches annexées, dans lesquelles :
- ) la figure 1 et la figure 2 sont des illustrations partielles d'un exemple de réalisation d'une caisse de véhicule automobile conforme à l'invention vue de l'intérieur, qui est représentée suivant un plan vertical/longitudinal d'extension de la caisse sur la figure 1 et en perspective sur la figure 2.
- ) la figure 3 et la figure 4 sont des détails de la caisse illustrée sur les figures 1 et 2 vue de l'intérieur, qui sont représentés en perspective avant sur la figure 3 et en perspective arrière sur la figure 4.

Les figures et leurs descriptions détaillées exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, notamment en relation avec la description générale qui vient d'en être faite.

Sur les figures, une caisse 1 de véhicule automobile s'étend longitudinalement L1 d'avant AV1 en arrière AR1, transversalement T1 entre ses côtés droit et gauche et verticalement V1 en élévation depuis son plan de roulage. La caisse 1 comprend classiquement un pavillon 2 ménageant une toiture du véhicule.

La caisse 1 est équipée à chacun de ses côtés latéraux droit et gauche d'au moins un dispositif à rideau gonflable 3. Sur les figures, un seul dit dispositif à rideau gonflable 3 est représenté, notamment celui installé au côté latéral gauche de la caisse 1. La caisse 1 est aussi équipée d'un dispositif à filet de charge 4 qui s'étend transversalement T1 à l'arrière AR1 d'un emplacement de la caisse 1 ménageant un espace d'installation d'au moins siège pour au moins un passager.

Le dispositif à rideau gonflable 3 comprend un coussin 5 gonflable et une réserve de gaz 6. En station inopérante, le coussin 5 est plié à l'intérieur d'un boîtier 7. En cas de chocs subis par le véhicule à un seuil d'impact prédéterminé, la réserve de gaz 6 alimente en gaz le coussin 5 pour son gonflage en station active, dans laquelle le coussin 5 forme alors un rideau de protection latérale des passagers.

Le dispositif à rideau gonflable 3 s'étend longitudinalement L1 en contrebas du pavillon 2 en étant fixé à la caisse 1 via des premiers organes d'ancrage 8a. Sur les figures, le dispositif à rideau gonflable 3 est ancré à une doublure de custode 9 via un premier organe d'ancrage 8a fixé à la réserve de gaz 6, par exemple par boulonnage.

La réserve de gaz 6 est disposée en surplomb et s'étend parallèlement au boîtier 7 suivant la direction longitudinale L1 d'extension de la caisse 1. La réserve de gaz 6 et le boîtier 7 sont attachés l'un à l'autre, notamment via des colliers de serrage 10, de manière à former un ensemble monobloc facilitant le montage du dispositif à rideau gonflable 3 sur la caisse 1.

Le dispositif à filet de charge 4 comprend un filet de charge 11 qui est porté à son sommet par une barre 12. La barre 12 s'étend transversalement T1 et est ancrée à chacune de ses extrémités 13 sur des doublures de custode 9 respectivement droite et gauche via des deuxièmes organes d'ancrage 8b.

Dans le cadre de l'invention et comme illustré sur les figures, l'extrémité 13 gauche de la barre 12 illustrée est placée à proximité longitudinale L1 du dispositif à rideau gonflable 3. Une telle proximité peut induire un risque de blessure du coussin 5 par l'extrémité 13 de la barre 12 lors de son gonflage.

Autrement dit, la proximité longitudinale L1 entre l'extrémité 13 de la barre 12 et le dispositif à rideau gonflable 3 est appréciée selon une distance de séparation longitudinale L1 entre eux qui est propre à induire un risque de blessure du coussin 5 par l'extrémité 13 de la barre 12 lors de son gonflage.

Dans ce contexte, un déflecteur 14 est longitudinalement L1 interposé entre l'extrémité 13 de la barre 12 et le dispositif à rideau gonflable 3. Un tel déflecteur 14 ménage un obstacle entre l'extrémité 13 de la barre 12 et le coussin 5 pour éviter tout risque de blessure du coussin 5 par l'extrémité 13 de la barre 12 lors de son gonflage. Une telle protection du coussin 5 par le déflecteur 14 est notamment utile dans le cas où la barre 12 est munie à son extrémité 13 d'un flasque 15 par exemple agencé en anneau. Un tel flasque 15 ménage par exemple une butée de positionnement transversal T1 du filet de charge 11 le long de la barre 12.

Tel que plus visible sur les figures 3 et 4, le déflecteur 14 est composé de deux parois 14a, 14b accolées l'une à l'autre et s'étendant suivant un plan vertical/transversal V1/T1 parallèlement à la barre 12. Lesdites parois 14a, 14b sont ménagées respectivement par le premier organe d'ancrage 8a et par le deuxième organe d'ancrage 8b, et sont subsidiairement soudées l'une à l'autre.

Plus particulièrement, le premier organe d'ancrage 8a est formé d'une première platine 16a qui s'étend suivant un plan longitudinal/vertical et qui est fixée sur la doublure de custode 9. La première platine 16a s'étend contre la face extérieure de la doublure de custode 9 qui est orientée vers l'extérieur de la caisse 1. La première platine 16a est formée d'une première ferrure comportant par pliage un premier retour 17a qui est orienté perpendiculairement au plan de la première platine 16a. Le premier retour 17a s'étend vers l'intérieur de la caisse 1 suivant un plan vertical/transversal V1/T1 pour former une première paroi 14a constitutive du déflecteur 14.

Le deuxième organe d'ancrage 8b est formé d'une deuxième platine 16b qui s'étend suivant un plan longitudinal/vertical L1/V1 et qui est fixée sur la doublure de custode 9 en s'étendant contre sa face extérieure en prolongement de la première platine 16a. La deuxième platine 16b est formée d'une deuxième ferrure comportant par pliage un deuxième retour 17b qui est orienté perpendiculairement au plan de la deuxième platine 16b et qui s'étend vers l'intérieur de la caisse 1 suivant un plan vertical/transversal V1/T1 pour former une deuxième paroi 14b constitutive du déflecteur 14.

Une fenêtre 18 est ménagée à travers la doublure de custode 9 pour autoriser une émergence à son travers de la première paroi 14a et de la deuxième paroi 14b, depuis la face extérieure la doublure de custode 9 vers l'intérieur de la caisse 1. La fenêtre 18 est agencée en une fente étendue principalement verticalement V1 et présentant une largeur suivant la direction longitudinale L1.

Le dispositif à rideau gonflable 3 et l'extrémité 13 de la barre 12 du dispositif à filet de charge 4 peuvent ainsi être montés individuellement sur la doublure de custode 9. Par suite du montage du dispositif à rideau gonflable 3 et de la barre 12 du dispositif à filet de charge 4 via les organes d'ancrage 8a, 8b qui leurs sont affectés, la première paroi 14a et la deuxième paroi 14b se trouvent alors accolées l'une contre l'autre pour former conjointement le déflecteur 14.

La deuxième paroi 14b est débordante par rapport à la première paroi 14a. La deuxième paroi 14b comporte des ailes de déflection 19 qui sont ménagées à chacun de ses bords périphériques émergeant hors de la doublure de custode 9. Les ailes de déflection 19 sont formées par des rebords périphériques de la deuxième paroi 14b qui sont orientés en direction de l'extrémité 13 de la barre 12. De telles ailes de déflection 19 ménagent des rampes de glissement du coussin 5 en phase de gonflage, pour éviter de le blesser par les bords du déflecteur 14.

## Revendications

1. Caisse (1) de véhicule automobile équipée de dispositifs à rideau gonflable et d'un dispositif à filet de charge (4), les dispositifs à rideau gonflable étant disposés à des côtés latéraux respectivement droit et gauche de la caisse (1) considérés suivant une direction transversale (T1) d'extension de la caisse (1), chacun des dispositifs à rideau gonflable (3) comprenant un coussin (5) gonflable plié à l'intérieur d'un boîtier (7) surplombé par une réserve de gaz (6) suivant une direction verticale (V1) d'extension de la caisse (1), le boîtier (7) et la réserve de gaz (6) s'étendant longitudinalement suivant une direction longitudinale (L1) d'extension de la caisse (1) entre l'avant (AV1) et l'arrière (AR1) de la caisse (1), en étant ancrés sur la caisse (1) via au moins un premier organe d'ancrage (8a), le dispositif à filet de charge (4) s'étendant transversalement à l'arrière d'un emplacement de la caisse (1) réservé à la réception d'au moins un siège et comprenant un filet de charge (11) qui est porté à son sommet par une barre (12) transversale (T1) dont les extrémités (13) sont chacune ancrées sur la caisse (1) à ses côtés latéraux respectivement droit et gauche via au moins un deuxième organe d'ancrage (8b), **caractérisée en ce que** tenant compte d'une proximité longitudinale (L1) entre l'une quelconque des extrémités (13) de la barre (12) et un dispositif à rideau gonflable (3), un déflecteur (14) est longitudinalement (L1) interposé entre l'un quelconque des dispositifs à rideau gonflable (3) et l'extrémité (13) de la barre (12) longitudinalement (L1) proche de l'extrémité arrière (AR1) dudit quelconque dispositif à rideau gonflable (3).

2. Caisse (1) de véhicule automobile selon la revendication 1, **caractérisée en ce que** le déflecteur (14) est formé d'au moins une paroi (14a, 14b) ancrée sur la caisse (1) et s'étendant suivant un plan transversal/vertical (T1, V1) en interposition longitudinale (L1) entre le dispositif à rideau gonflable et l'extrémité (13) de la barre (12).

3. Caisse (1) de véhicule automobile selon l'une quelconque des revendications 1 et 2, **caractérisée en ce que** le déflecteur (14) est au moins en partie solidaire de l'un quelconque au moins d'un dit premier organe d'ancrage (8a) et/ou d'un dit deuxième organe d'ancrage (8b).

4. Caisse (1) de véhicule automobile selon l'une quelconque des revendications 1 à 3, **caractérisée en ce que** le déflecteur (14) est issu de la matière constitutive de l'un quelconque au moins d'un dit premier organe d'ancrage (8a) et/ou d'un dit deuxième organe d'ancrage (8b) auquel le déflecteur (14) est intégré.

5. Caisse (1) de véhicule automobile selon la revendication 4, **caractérisée en ce que** le déflecteur (14) est au moins en partie intégré à l'extrémité arrière (AR1) d'une première platine (16a) constitutive d'un dit premier organe d'ancrage (8a).

6. Caisse (1) de véhicule automobile selon l'une quelconque des revendications 4 et 5, **caractérisée en ce que** le déflecteur (14) est au moins en partie intégré à l'extrémité avant (AV1) d'une deuxième platine (16b) constitutive d'un dit deuxième organe d'ancrage (8b).

7. Caisse (1) de véhicule automobile selon les revendications 5 et 6, **caractérisée en ce que** le déflecteur (14) est composé d'une première paroi (14a) intégrée à la première platine (16a) et d'une deuxième paroi (14b) intégrée à la deuxième platine (16b), la première paroi (14a) et la deuxième paroi (14b) étant accolées l'une contre l'autre suivant le plan global d'extension du déflecteur (14).

8. Caisse (1) de véhicule automobile selon l'une quelconque des revendications 1 à 7, **caractérisée en ce qu'**au moins une aile de déflection (19) orientée vers l'extrémité (13) de la barre (12) est ménagée le long de l'un au moins des bords périphériques du déflecteur (14).

9. Caisse (1) de véhicule automobile selon les revendications 7 et 8, **caractérisée en ce que** la deuxième paroi (14b) déborde de la périphérie de la première paroi (14a) et comporte au moins une dite aile de déflection (19) qui est ménagée le long de l'un au moins des bords de la deuxième paroi (14b) en étant orientée et infléchie vers l'extrémité (13) de la barre (12) du dispositif à filet de charge (4).

10. Caisse (1) de véhicule automobile selon l'une quelconque des revendications 1 à 9, **caractérisée en ce que** le déflecteur (14) émerge hors d'une fenêtre (18) ménagée à travers une doublure de custode (9) que comprend la caisse (1) et sur laquelle sont ancrés le dispositif à rideau gonflable via ledit au moins un premier organe d'ancrage (8a) et l'extrémité (13) de la barre (12) du dispositif à filet de charge (4) via ledit au moins un deuxième organe d'ancrage (8b).

## Patentansprüche

1. Kraftfahrzeugkarosserie (1) mit aufblasbaren Vorhangeinrichtungen und einer Lastnetzeinrichtung (4), wobei die aufblasbaren Vorhangeinrichtungen an jeweils rechten und linken Seitenseiten der Karosserie (1) in einer Querausdehnungsrichtung (T1) der Karosserie (1) angeordnet sind, wobei jede der aufblasbaren Vorhangeinrichtungen (3) einen aufblasbaren Kissen (5) aufweist, der innerhalb eines Gehäuses (7) gebogen ist, das von einem Gasvorrat (6) in einer vertikalen Ausdehnungsrichtung (V1) der Karosserie (1) überdeckt ist, wobei das Gehäuse (7) und der Vorrat Gase (6), die sich in Längsrichtung entlang einer Längsrichtung (L1) der Ausdehnung des Wagenkastens (1) zwischen der Vorderseite (AV1) und der Rückseite (AR1) des Wagenkastens (1) erstrecken und über mindestens ein erstes Verankerungsorgan (8a) am Wagenkasten (1) verankert sind, wobei sich die Lastnetzeinrichtung (4) quer hinter einer für die Aufnahme mindestens eines Sitzes vorgesehenen Stelle des Wagenkastens (1) erstreckt und ein Lastnetz (11) umfasst, das an seiner Oberseite von einer Querstange (T1) getragen wird, deren Enden (1) 3) jeweils über mindestens ein zweites Verankerungsorgan (8b) an der Karosserie (1) an ihrer rechten bzw. linken Seitenseite verankert sind, **dadurch gekennzeichnet, dass** unter Berücksichtigung einer Längsnähe (L1) zwischen einem der Enden (13) der Stange (12) und einer aufblasbaren Vorhangeinrichtung (3) ein Ablenker (14) in Längsrichtung (L1) zwischen einer der aufblasbaren Vorhangeinrichtungen (3) und dem dem hinteren Ende (AR1) benachbarten Ende (13) der Stange (12) angeordnet ist der aufblasbaren Vorhangeinrichtung (3).

2. Kraftfahrzeugkarosserie (1) nach Anspruch 1, **dadurch gekennzeichnet, dass** der Ablenker (14) aus mindestens einer an der Karosserie (1) verankerten Wand (14a, 14b) gebildet ist, die sich in einer Quer-/Vertikalebene (T1, V1) in Längszwischenlage (L1) zwischen der aufblasbaren Vorhangeinrichtung und dem Ende (13) der Stange (12) erstreckt.

3. Wagenkasten (1) für ein Kraftfahrzeug nach einem der Ansprüche 1 und 2, **dadurch gekennzeichnet, dass** der Ablenker (14) zumindest teilweise mit einem beliebigen der ersten Verankerungselemente (8a) und/oder einem zweiten Verankerungselement (8b) verbunden ist.

4. Wagenkasten (1) eines Kraftfahrzeugs nach einem der Ansprüche 1 bis 3, **dadurch gekennzeichnet, dass** der Ablenker (14) aus dem Material eines beliebigen der ersten Verankerungselemente (8a) und/oder eines zweiten Verankerungselements (8b), in das der Ablenker (14) integriert ist, hergestellt ist.

5. Kraftfahrzeugkarosserie (1) nach Anspruch 4, **dadurch gekennzeichnet, dass** der Ablenker (14) zumindest teilweise in das hintere Ende (AR1) einer ersten Platte (16a) integriert ist, die ein erstes Verankerungsorgan (8a) bildet.

6. Wagenkasten (1) eines Kraftfahrzeugs nach einem der Ansprüche 4 und 5, **dadurch gekennzeichnet, dass** der Ablenker (14) zumindest teilweise in das vordere Ende (AV1) einer zweiten Platte (16b) integriert ist, die ein zweites Verankerungsorgan (8b) bildet.

7. Kraftfahrzeugkarosserie (1) nach den Ansprüchen 5 und 6, **dadurch gekennzeichnet, dass** der Ablenker (14) aus einer ersten Wand (14a), die in die erste Platte (16a) integriert ist, und einer zweiten Wand (14b), die in die zweite Platte (16b) integriert ist, besteht, wobei die erste Wand (14a) und die zweite Wand (14b) entlang der Gesamtausdehnungsebene des Ablenkers (14) aneinander anliegen.

8. Kraftfahrzeugkarosserie (1) nach einem der Ansprüche 1 bis 7, **dadurch gekennzeichnet, dass** mindestens ein dem Ende (13) der Stange (12) zugewandter Ablenkflügel (19) entlang mindestens einer der Umfangsränder der Ablenkplatte (14) ausgebildet ist.

9. Kraftfahrzeugkarosserie (1) nach den Ansprüchen 7 und 8, **dadurch gekennzeichnet, dass** die zweite Wand (14b) über den Umfang der ersten Wand (14a) hinausragt und mindestens einen so genannten Ablenkflügel (19) aufweist, der entlang mindestens einer der Kanten der zweiten Wand (14b) in Richtung auf das Ende (13) der Stange (12) der Lastgewindevorrichtung (4) gerichtet und gebogen ausgebildet ist.

10. Kraftfahrzeugkarosserie (1) nach einem der Ansprüche 1 bis 9, **dadurch gekennzeichnet, dass** der Ablenker (14) aus einem Fenster (18) herausragt, das durch eine Kustodenauskleidung (9) gebildet ist, die die Karosserie (1) umfasst und an der die aufblasbare Vorhangvorrichtung über das mindestens eine erste Verankerungsorgan (8a) und das Ende (13) der Stange (12) der Lastnetzvorrichtung (4) über das mindestens eine zweite Verankerungsorgan (8b) verankert ist.

## Claims

1. Motor vehicle body (1) equipped with inflatable curtain devices and with a load net device (4), the inflatable curtain devices being arranged at respective right and left lateral sides of the body (1) considered in a transverse direction (T1) of extension of the body (1), each of the inflatable curtain devices (3) comprising an inflatable cushion (5) folded inside a housing (7) overhung by a gas reserve (6) in a vertical direction (V1) of extension of the body (1), the housing (7) and the gas reserve (6) Extending longitudinally along a longitudinal direction (L1) of extension of the body (1) between the front (AV1) and the rear (AR1) of the body (1), being anchored on the body (1) via at least a first anchoring member (8a), the load net device (4) extending transversely to the rear of a location of the body (1) reserved for the reception of at least one seat and comprising a load net (11) which is carried at its top by a transverse bar (12) (T1) whose ends (13) are each anchored on the body (1) body (1) at its lateral sides respectively right and left via at least a second anchoring member (8b), **characterized in that** taking into account a longitudinal proximity (L1) between any of the ends (13) of the bar (12) and an inflatable curtain device (3), a deflector (14) is longitudinally (L1) interposed between any of the inflatable curtain devices (3) and the end (13) of the bar (12) longitudinally (L1) close to the rear end (AR1) of said any inflatable curtain device (3)).

2. Motor vehicle body (1) according to claim 1, **characterized in that** the deflector (14) is formed by at least one wall (14a, 14b) anchored on the body (1) and extending in a transverse/vertical plane (T1, V1) in longitudinal interposition (L1) between the inflatable curtain device and the end (13) of the bar (12).

3. Motor vehicle body (1) according to any one of Claims 1 and 2, **characterized in that** the deflector (14) is at least partially integral with any one of at least one of said first anchoring member (8a) and/or said second anchoring member (8b).

4. Motor vehicle body (1) according to any one of Claims 1 to 3, **characterized in that** the deflector (14) is derived from the material constituting any one of at least one of said first anchoring member (8a) and/or of a said second anchoring member (8b) to which the deflector (14) is integrated.

5. A motor vehicle body (1) according to claim 4, **characterized in that** the deflector (14) is at least partially integrated with the rear end (AR1) of a first plate (16a) constituting a said first anchoring member (8a).

6. Motor vehicle body (1) according to any one of Claims 4 and 5, **characterized in that** the deflector (14) is at least partially integrated into the front end (AV1) of a second plate (16b) constituting a said second anchoring member (8b).

7. Motor vehicle body (1) according to claims 5 and 6, **characterized in that** the deflector (14) is composed of a first wall (14a) integrated into the first plate (16a) and of a second wall (14b) integrated into the second plate (16b), the first wall (14a) and the second wall (14b) being joined together in the overall plane of extension of the deflector (14).

8. Motor vehicle body (1) according to one of Claims 1 to 7, **characterized in that** at least one deflecting flange (19), which faces the end (13) of the bar (12), is provided along at least one of the peripheral edges of the deflector (14).

9. Motor vehicle body (1) according to claims 7 and 8, **characterized in that** the second wall (14b) projects beyond the periphery of the first wall (14a) and comprises at least one said deflection wing (19) which is formed along at least one of the edges of the second wall (14b), being oriented and bent towards the end (13) of the bar (12) of the load net device (4).

10. Motor vehicle body (1) according to any one of Claims 1 to 9, **characterized in that** the deflector (14) emerges from a window (18) formed through a rear quarter lining (9) which the body (1) comprises and on which the inflatable curtain device is anchored via said at least one first anchoring member (8a) and the end (13) of the bar (12) of the load net device (4) via said at least one second anchoring member (8b).
